(19) Europäisches Patentamt
European Patent Office
Office européen des brevets

(11) EP 2 519 551 B1

(12) **EUROPEAN PATENT SPECIFICATION**

(45) Date of publication and mention of the grant of the patent:
**02.08.2017 Bulletin 2017/31**

(21) Application number: **10803197.2**

(22) Date of filing: **29.12.2010**

(51) Int Cl.:
***C08F 283/01*** *(2006.01)* ***C08L 67/06*** *(2006.01)*
***C09D 167/06*** *(2006.01)* ***H01B 3/42*** *(2006.01)*
***H01F 27/32*** *(2006.01)* ***H01F 41/12*** *(2006.01)*
***H02K 3/30*** *(2006.01)* ***C08F 283/02*** *(2006.01)*
***C08F 283/06*** *(2006.01)* ***C08F 290/06*** *(2006.01)*
***C08L 51/08*** *(2006.01)*

(86) International application number:
**PCT/US2010/062316**

(87) International publication number:
**WO 2011/082211 (07.07.2011 Gazette 2011/27)**

(54) **COMPOSITION FOR FIXING WOUND ITEMS**

ZUSAMMENSETZUNG ZUR FIXIERUNG GEWUNDENER ELEMENTE

COMPOSITION POUR FIXER DES ARTICLES ENROULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2009 US 291128 P**

(43) Date of publication of application:
**07.11.2012 Bulletin 2012/45**

(73) Proprietor: **Coatings Foreign IP Co. LLC**
**Wilmington, DE 19801 (US)**

(72) Inventors:
- **HERM, Michael**
  **42553 Velbert (DE)**
- **BOEHM, Frank-Rainer**
  **51519 Odenthal (DE)**
- **RICHTER, Anja**
  **42103 Wuppertal (DE)**
- **GRUENE DE JONG, Ulrike**
  **42115 Wuppertal (DE)**
- **TRAPPMANN, Barbara**
  **40479 Düsseldorf (DE)**
- **RITTINGHAUS, Volker**
  **42279 Wuppertal (DE)**

(74) Representative: **Lorenz & Kopf PartG mbB**
**Patentanwälte,**
**LKGLOBAL**
**Brienner Straße 11**
**80333 München (DE)**

(56) References cited:
**EP-A2- 0 350 730**
**WO-A1-00/46297**
**WO-A1-92/01015**
**WO-A2-03/101918**
**CA-A1- 2 119 206**
**FR-A1- 2 401 946**
**US-A- 3 485 733**
**US-A- 5 096 938**
**US-A- 5 466 492**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 519 551 B1

**Description**

## Field of the Invention

The present invention refers to a composition for fixing wound items, in particular electrical windings in electrical equipment providing excellent impregnation properties into the wound items as well as extraordinarily good mechanical toughness, especially at high temperatures

## Background of the Invention

The use of unsaturated polymers in compositions suitable for impregnating (e.g. by techniques of immersion, dipping, tickling or casting) wound items such as electrical coils and windings, especially windings of magnet wires in electrical devices as well as for casting of electrical devices such as stators, rotors and transformers, for mechanical toughening and fixing, is well known in the art. Various resins can be used for those applications, which typically provide electrical insulation, stabilization of the electrical winding against vibrations, improved aging behaviour and protection against chemical and mechanical impact. As downsizing and efficiency increase of electrical devices is a more and more important topic, the operating temperatures of especially electrical motors become higher. Impregnating materials which are used in motors with high operating temperatures have to be chemically stable at the operating temperatures and also mechanically tough to withstand mechanical forces and/or impact at these elevated temperatures.

Impregnation materials based on unsaturated polyesters dissolved in styrene typically show good mechanical toughness, also at elevated temperatures. They have low viscosities, so impregnation quality is typically not an issue. However, such systems show a strong loss of styrene upon curing of the impregnation material, resulting in a significant amount of volatile organic compounds (VOC). Therefore, there is a strong demand for mechanically tough impregnation materials with low to zero emissions.

Mechanical properties can e.g. be improved using fillers, however, impregnation materials containing such fillers are typically not very homogeneous. This could cause problems regarding storage conditions of the composition and can additionally lead to failure of the penetration into the cavities of electrical windings as well as to failure of the impregnation during operation of the electrical device.

Also, mechanical properties can be improved using binder resins with higher molecular weights and / or rigid polymer building blocks. Especially useful are building blocks which contain rigid ring structures, e.g. di- or polycyclopentadiene as described in DE-A 3107450, EP-A 101585, EP-A 871677, EP-A 963413 or EP-A 968501. However, the viscosities of such impregnation materials (especially in low or zero VOC diluents) are typically high, so that the application process becomes more difficult than with standard impregnation materials, e.g. heat has to be applied. This increases the danger of premature curing of the impregnating material. Furthermore, a good impregnation quality with excellent penetration of the impregnation material into the device's magnet wire windings is much more difficult to achieve if the impregnation material has a high viscosity.

US 3,485,733 A1 discloses telomerised diacrylyl polyesters which are obtained by condensation of a glycidyl ester with an unsaturated aliphatic polycarboxylic acid and a liner polyester of such an acid. The telomerised polyesters are highly radiation-sensitive.

## Summary of the Invention

The invention provides a composition for fixing wound items comprising

A) 5 to 90 wt% of at least one $\alpha$, $\beta$ -unsaturated polyester resin based on at least one unsaturated mono-, di- or tricarboxylic acids and/or mono-, di- or tricarboxylic acid group containing molecules, at least one polyol, at least one acrylic or methacrylic group containing component, wherein the $\alpha$, $\beta$ -unsaturated polyester resin comprises at least one $\alpha$, $\beta$ -unsaturated polyester imide resin,

B) 2 to 80 wt% of at least one monomeric and/or oligomeric ethylenically unsaturated component having a vapour pressure in a range of 0 to 100 Pa (0 to 1 mbar) at 20°C, preferred 0 to 50 Pa (0 to 0.5 mbar) at 20°C,

C) 0.1 to 40 wt% of at least one monomeric and/or oligomeric unsaturated component different from B) having a vapour pressure in a range of 0 to 1000 Pa (0 to 10 mbar) at 20°C, preferred 0 to 500 Pa (0 to 5 mbar) at 20°C,

D) 0 to 15 wt% of at least one customary additive, and

E) 0 to 30 wt% of at least one monomer and/or polymer containing epoxy or glycidyl ether or ester moieties,

the wt% being based on the total weight of the composition.

The composition of the present invention provides low curing emissions, low viscosities and excellent impregnation properties into the wound items. After curing, these impregnation materials show high mechanical toughness

levels even at elevated temperatures.

## Detailed Description

The features and advantages of the present invention will be more readily understood, by those of ordinary skill in the art, from reading the following detailed description. References in the singular may also include the plural (for example, "a" and "an" may refer to one, or one or more) unless the context specifically states otherwise.

The slight variations above and below the stated ranges of numerical values can be used to achieve substantially the same results as values within the ranges. Also, the disclosure of these ranges is intended as a continuous range including every value between the minimum and maximum values.

The term "typical" means "known to a person skilled in the art".

All the number average molar mass data stated in the present description are determined or to be determined by gel permeation chromatography (GPC; divinylbenzene-cross-linked polystyrene as the immobile phase, tetrahydrofuran as the liquid phase, polystyrene standards, according to DIN 55672).

The term (meth)acryl refers to acryl and/or methacryl in this document.

The composition according to the invention comprises at least one α, β -unsaturated polyester resin as component A) in a range of 5 to 90 wt%, preferably 10 to 75 wt%, particularly preferred are 15 to 70 wt%, the wt% being based on the total weight of the composition.

The at least one polyester resin of A) comprises also at least one α, β -unsaturated polyester imide resin comprising at least one imide having 5-membered cyclic imide moieties.

The polyester resin of component A) may have a hydroxyl value of 0 to 120 mg KOH/g, preferably 0 to 80, an acid value of 0 to 70 mg KOH/g, preferably 0 to 50 mg KOH/g, as well as a urethane group concentration of 0 to 0.1 mol per 100g resin A).

The acid value is defined as the number of mg of potassium hydroxide (KOH) required to neutralise the carboxylic groups of 1 g of the resin, according to DIN EN ISO 2114.

The term hydroxyl value in this description is defined as the number of mg of potassium hydroxide (KOH) which is equal to the number of mg acetic acid for acetalizing of 1 g of the resin, determined according to DIN 53240.

The polyester component A) can be obtained by reaction of

(a) at least one α, β - ethylenically unsaturated dicarboxylic acid, its anhydride and/or an ester of the α, β - ethylenically unsaturated dicarboxylic acid, and
(b) at least one alcohol having one or more, preferably 2, 3 or 4, hydroxyl functionalities per molecule, and,
(c) at least one imide group containing substance with the formula

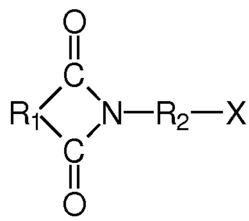

(Formula 1)

or

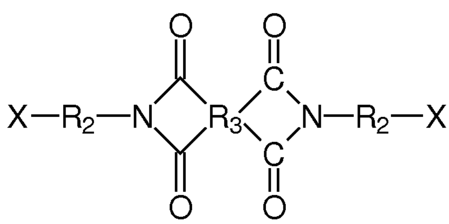

(Formula 2)

or

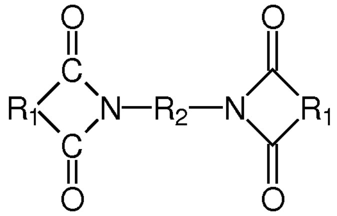

(Formula 3)

in which

$R_1$ is an aliphatic, cycloaliphatic or aromatic moiety in which the carbonyl groups in $R_1$ are in a 1,2-position and that contains at least one further reactive carboxyl or hydroxyl group or a C=C double bond or combinations thereof,
$R_2$ is an aliphatic, aromatic or cycloaliphatic moiety with 2 to 20 carbon atoms that may also contain oxygen or nitrogen atoms,
$R_3$ is an aliphatic, cycloaliphatic or aromatic moiety in which at least 2 of 4 carbonyl groups in $R_3$ are in a 1,2-position, and
X is a hydroxyl or carboxy functionality, and

(d) at least one component which is chemically bound into the resin and which contains at least one (meth)acrylic double bond, and
(e) possibly one or more mono, di- or tricarboxylic acids which are different from (a), and
(f) possibly one or more polyether polyols, polyolefinic polyols or polymeric polyols which are different from b), and
(g) possibly one or more polyisocyanates.

The ratio of the reaction components (a) to (g) is chosen in such a way, known to a person skilled in the art, that 100g of component A) contain 0.05 to 0.50 mol of polymerizable, $\alpha$, $\beta$ - ethylenically unsaturated groups from component (a), the amount of imidically bonded nitrogen in A) is at least 0.5 wt%, preferably at least 1.5 wt% on the resin, and the ratio of the reaction components (a) to (g) is chosen in such amounts that the aforementioned hydroxyl value, acid value and urethane group concentration are achieved, as known by a person skilled in the art. The number average molecular mass (Mn) of component A) is in a range of, for example, 400 to 8000 g/mol, preferably in a range of 500 to 5000 g/mol.

Typical $\alpha$, $\beta$ - ethylenically unsaturated dicarboxylic acids (a) are, for example, those with 4 or 5 carbon atoms, or their anhydrides or esters. Examples are maleic anhydride, fumaric acid, itaconic acid or anhydride, methylene malonic acid, citraconic anhydride or mesaconic acid. Preferably, maleic anhydride and fumaric acid are used.

Typical alcohols of (b) are, for example, mono-, di- or trifunctional alcohols with 2 to 18 carbon atoms like 8(9)-hydroxytricyclo[5.2.1.0$^{2.6}$]dec-3-en, 1,4-bis-hydroxymethyl cyclohexane, 2,2-bis-(4-hydroxycyclohexyl)-propane, ethylene glycol, propylene glycol, 1,3-propane diol, neopentyl glycol (NPG), trimethylol propane (TMP), glycerol, tris(hydroxyethyl)isocyanurate (THEIC) and pentaerythritol. The use of alcohols with a functionality, greater than 2 leads to branched structures. Preferred alcohols of (b) are 1,3-propane diol, neopentyl glycol, THEIC and trimethylol propane.

Typical imide group containing moieties (c) are the reaction products of tricarboxylic acids or their anhydrides, like trimellitic anhydride, 3,3',4-benzophenone-tricarboxylic acid anhydride, tricarballylic acid or unsaturated cycloaliphatic, aromatic or aliphatic dicarboxylic acid anhydrides like tetrahydrophthalic anhydride, hexahydrophthalic anhydride, phthalic anhydride, *endo*-methylene tetrahydrophthalic anhydride or maleic anhydride with aliphatic, cycloaliphatic, heterocyclic or aromatic aminoalcohols or aminocarboxylic acids. Appropriate aminoalcohols are e.g. ethanolamine, propanolamine, butanolamine, their higher homologues, 4-aminocyclohexanol, 4-aminobenzyl alcohol or aromatically amino-substituted phenyl ether alcohols. Suitable aminocarboxylic acids are e.g. aminoacetic acid, aminopropionic acid, aminocapronic acid and 4-aminobenzoic acid.

Further examples for substances (c) are reaction products of tetracarboxylic acids or their anhydrides like pyromellitic anhydride, benzophenone tetracarboxylic acid dianhydride, butane tetracarboxylic acid dianhydride, cyclopentane tetracarboxylic acid dianhydride with aliphatic, cycloaliphatic, heterocyclic or aromatic aminoalcohols or aminocarboxylic acids, and/or reaction products of 2 mols of tricarboxylic acids or their anhydrides like trimellitic anhydride, tricarballylic acid or 3,3',4-benzophenone tricarboxylic acid anhydride with 1 mol aromatic diamines like 4,4'-diamino-diphenylmethane, 4,4-diamino diphenylether or aliphatic and/or cycloaliphatic diamines like 4,4'-diamino dicyclohexylmethane, ethylene diamine, propylene diamine or aliphatic etheramines. Instead of the above mentioned diamines, also the respective diisocyanates can be used. Preferred imide group containing substances (c) are the reaction products of tetrahydrophthalic anhydride or trimellitic anhydride with ethanolamine.

Typical examples for the (meth)acryl functional components (d) are functional polyester (meth)acrylates, functional polyether(meth)acrylates, functional silicone (meth)acrylates, functional (meth)acrylated poly(butadiene) or functional urethane (meth)acrylates, in which the functional group can be, for example, a hydroxy, carboxy, epoxy and/or isocyanate group. Further examples are carboxy (meth)acrylates and their derivatives such as acid halides, hydroxy (meth)acrylates, epoxy (meth)acrylates and amino (nieth)acrylates, for example, hydroxybutyl (meth)acrylate, glycidyl (meth)acrylate, trimethylolpropane di(meth)acrylate, pentaerythritol tri(meth)acrylate, (meth)acrylic acid chloride. Preferred are glycidyl (meth)acrylate, (meth)acrylic acid chloride and hydroxyethyl (meth)acrylate.

Typical carboxylic acids (e) different from a) can be saturated and/or unsaturated aliphatic, cycloaliphatic and/or aromatic mono-, di-, tri- and/or tetracarboxylic acids, anhydrides and/or esters, especially alkyl esters having 1 to 4 carbon atoms in the alkyl chain. Examples are dicyclopentadiene dimaleinate, tetrahydrophthalic acid anhydride, *endo*-methylene tetrahydrophthatic anhydride, trimellitic anhydride, terephthalic acid, isophthalic acid, tetrachlorophthalic acid, hexachlorophthalic acid, adipic acid, glutaric acid, sebacinic acid, oligo- and/or polymeric fatty acids, carboxyfunctional polyolefins.

Typical examples for (f) different from b) are polyethylene glycol, polypropylene glycol, polytetrahydro furane, reaction products of the addition of ethylene oxide or propylene oxide to polyfunctional alcohols with 2 to 4 hydroxy groups like glycerol, trimethylol ethane, trimethylol propane, triethanolamine or pentaerythritol or with polyfunctional phenols with 2 to 4 hydroxyl groups like catechol, hydroquinone, bisphenol A or bisphenol F, further examples are hydroxyfunctional homo- or copolymers obtained by radical polymerization, hydroxyfunctional polycarbonates or hydroxyfunctional polyester with weight average molar masses between 400 and 10000 g/mol or polyolefinic polyols such as hydroxyfunctional polymers of ethylene, propylene, butylene, octene, isoprene, butadiene, chloroprene or combinations thereof.

The polyisocyanates (g) are preferably polyisocyanates containing 2 or more isocyanate groups, for example, aliphatic, cycloaliphatic or aromatic diisocyanates with 6 to 18 carbon atoms like 1,6-hexamethylene diisocyanate, 2,4'- and 4,4'-dicyclohexylmethane diisocyanate, 3-Isocyanatomethyl-3,5,5-trimethyl cyclohexylisocyanate, 2,2,3- and 2,4,4-trimethyl hexamethylene diisocyanates, cyclohexanone 1,3- and 1,4-diisocyanate, 2,4- and 2,6-toluylene diisocyanate, 2,4'- and 4,4'-diphenylmethane diisocyanate, polyisocyanates that are obtained by reaction of a polyisocyanate with a substoichiometric amount of polyols, or trimerization products of above mentioned polyisocyanates, or products with biuret structures made from above mentioned polyisocyanates, or products with uretdione structures made from above mentioned polyisocyanates. Preferred are aromatic isocyanates like 2,4'- and 4,4'-diphenylmethane diisocyanate and their mixtures.

In case all components (a) to (g) are used the component (g) is preferably used in such an amount that the urethane group content of the unsaturated polyester or polyester imide A) is in the range of 0 to 0,1 mol per 100g of A).

The polyester imides or polyesters A) may be prepared by methods well known to a person skilled in the art, for example, by polyesterification by heating the components, e.g. to temperatures of 120 to 240°C in a melt process under inert gas or in an azeotropic process, possibly in the presence of polyesterification catalysts.

The ratios of the amounts of the components (a) to (g) are chosen in such a way, known to a person skilled in the art, that the number average molar mass of the resulting resin A) is in the range of 400 to 8000 g/mol, preferably 500 to 5000 g/mol.

The composition according to the invention comprises 2 to 80 wt%, preferably 4 to 65 wt%, of at least one monomeric and/or oligomeric ethylenically unsaturated component (B) characterized by ethylenically unsaturated structures having one or more vinylic or allylic double bonds, which are radically polymerizable. Component (B) has a vapour pressure in a range of 0 to 100 Pa (0 to 1 mbar) at 20°C, preferred 0 to 50 Pa (0 to 0.5 mbar) at 20°C.
Examples are phthalic acid diallyl ester, triallyl isocyanurate, diallyl bisphenol A, pentaerythritol tri or tetra allyl ether. Component (B) may be also (meth)acrylic acid esters like hydroxyethyl (meth)acrylate, hydroxypropyl (meth)acrylate, phenoxyethyl (meth)acrylate, dicyclopentadiene (meth)acrylate, butane diol di(meth)acrylate, hexane diol (meth)acrylate, dipropylene glycol di(meth)acrylate, trimethylol propane di- and tri(meth)acrylate, pentaerythritol di- and tri(meth)acrylate, epoxy resin (meth)acrylates, (meth)acrylates of reaction products of a polyaddition of ethylene or propylene oxide with polyols such as trimethylol propane or pentaerythritol, and (meth)acrylates of oligo(ethylene glycol) or oligo(propylene glycol). Preferred examples for (B) are hexane diol dimethacrylate, butane diol dimethacrylate and (meth)acrylates of reaction products of a polyaddition of ethylene oxide with trimethylol propane or mixtures thereof.

Up to 50 wt%, preferred 0 to 10 wt% of the component (B) can consist of monomers with polymerizable groups like maleic or fumaric bis-alkyl esters, in which the alkyl groups contain 1 to 4 carbon atoms, or like mono- or bis-maleic imides (see also DE-A-2040094, DE-A-2719903, DE-A-3247058 and EP-A-0255802).

The composition according to the invention comprises 0.1 to 40 wt%, preferably 1 to 40 wt%, of at least one monomeric and/or oligomeric unsaturated component (C) different from component (B) characterized by ethylenically unsaturated structures having one or more vinylic or allylic double bonds, which are radically polymerizable. Examples are styrene, vinyl toluene, p-methyl styrene, tert.-butyl styrene, divinyl benzene, N-vinyl pyrrolidone, hydroxybutyl vinyl ether, butane diol vinyl ether, triethylene glycol divinyl ether, phthalic acid diallyl ester, fumaric acid diallyl ester, triallyl

phosphate, triallyl isocyanurate, diallyl benzene, diallyl bisphenol A, pentaerythritol tri or tetra allyl ether. Component (C) may be also (meth)acrylic acid esters like hydroxyethyl (meth)acrylate, hydroxypropyl (meth)acrylate, phenoxyethyl (meth)acrylate, dicyclopentadiene (meth)acrylate, butane diol di(meth)acrylate, hexane diol (meth)acrylate, dipropylene glycol di(meth)acrylate, trimethylol propane di- and tri(meth)acrylate, pentaerythritol di- and tri(meth)acrylate, epoxy resin (meth)acrylates, (meth)acrylates of reaction products of a polyaddition of ethylene or propylene oxide with polyols such as trimethylol propane or pentaerythritol, and (meth)acrylates of oligo(ethylene glycol) or oligo(propylene glycol). Preferred examples for (C) are styrene, vinyl toluene, hexane diol dimethacrylate, butane diol dimethacrylate and (meth)acrylates of reaction products of a polyaddition of ethylene oxide with trimethylol propane or mixtures thereof. Component (C) has a vapour pressure in a range of 0 to 1000 Pa (0 to 10 mbar) at 20°C, preferred 0 to 500 Pa (0 to 5 mbar) at 20°C.

Up to 50 wt.%, preferred 0 to 10 wt.-% of the component (C) can consist of monomers with polymerizable groups like maleic or fumaric bis-alkyl esters, in which the alkyl groups contain 1 to 4 carbon atoms, or like mono- or bis-maleic imides (see also DE-A-2040094, DE-A-2719903, DE-A-3247058 and EP-A-0255802).

The composition according to the invention comprises 0 to 15 wt%, preferably 0 to 10 wt%, more preferably 0.1 to 10 wt%, of at least one customary additive as component (D) which are additives as known to a person skilled in the art, for example, extenders, plasticising components, accelerators, for example metal salts, substituted amines; initiators, for example photo initiators such as chorine containing photoinitiators, aromatic ketones, hydroxyalkyl phenones, initiators such as peroxides, hydroperoxides, ketone peroxides, heat-responsive initiators such as C-C-labile 1,2-substituted tetraphenyl ethanes having, for example, the formula $YPh_2C\text{-}CPh_2Y$ with Ph: phenyl, Y: $-OH$, $-OCH_3$, $-OC_6H_5$, $-CH_3$, $-CN$, $-NH_2$, $-Cl$ or $-OSi(CH_3)_3$; stabilisers (inhibitors), for example, hydroquinones, quinones, quinone-type inhibitors, phenol-type inhibitors, organic salts of metals and/or sterically hindered aliphatic or aromatic amines; alkylphenols, alkylphenol ethers, defoamers and flow control agents.

For the adjustment of special properties like curing speed, surface hardness and surface smoothness, further polymerizable oligomers, polymers or copolymers can be added, for example, liquid poly(butadiene)s like (meth)acrylated poly(butadiene, epoxy(meth)acrylates, urethane (meth)acrylates, polyester (meth)acrylates, unsaturated polyesters and polyester imides which are different from (A).

Further additives may be fiber-like reinforcement agents like carbon, glass, polyamide, polyester, polyacrylnitrile, polyaramide, polyamideimide or polycarbonate fibers or fillers like chalk, talc, aluminium hydroxide, quartz flour, slate flour, clay or microdolomite; organic and inorganic pigments, dyes, thixotropy agents and shrinkage reducing agents.

The amount of such additives in the composition is depending on the respective application, and is known to a person skilled in the art.

The composition according to the invention comprises 0 to 30 wt%, preferably 0 to 20 wt%, more preferably 0.1 to 20 wt%, of at least one monomer and/or polymer containing epoxy or glycidyl ether or ester moieties as component (E), comprising monomers or polymers containing epoxy or glycidyl ether or ester moieties such as bisphenol A diglycidylether, bisphenol F diglycidylether and/or the appropriate oligomers and polymers, glycidol, aliphatic and/or aromatic epoxides such as styrene oxide, glycidyl methacrylate, versatic acid glycidyl ester, epoxidized poly(butadiene)s, poly(chloroprenes) and poly(isoprenes).

The components (A), (B), (C), (D) and (E) of the composition according to the invention may be mixed as readily prepared materials in any sequence. The components (A), (B) and/or D) and/or (E) may also be dissolved in (C) and afterwards mixed together, and the components (A), (C) and/or (D) and/or (E) may also be dissolved in (B) and afterwards mixed together. It is also possible to pre-mix components (B) and (C), and then dissolve components (A) and/or (D) and/or (E) in this mixture.

The use of the composition according to the invention may be proceeded by processes known in the art, for example, by dip impregnation, vacuum impregnation or trickle impregnation. In the dip impregnation process, the substrates are dipped into the composition for a certain time or pulled through the composition. The substrate may be heated to temperatures below the curing temperature of the composition before dipping. In the vacuum impregnation process, the substrates are placed into a dosed container, vacuum is applied, then the composition of the invention can be flushed into the container. In the trickle impregnation process, the composition according to this invention can be trickled with e.g. a nozzle onto a rotating substrate.

It can be useful to heat the substrate to temperatures below the curing temperature of the composition in order to improve, compared to non-heated substrates, the penetration of the impregnating resin into the substrate, especially into wire coils. The heating may be provided by methods known in the art, for example, by electrical current or in an oven, for example, during or before impregnation process.

After the impregnation process the composition according to this invention can be cured. This can be proceeded, for example, by radical polymerization, and for this radical polymerization it is useful to add radical initiators as part of component D) to the composition of the invention. The curing may be carried out by heating the impregnated substrate and/or by irradiation the impregnated substrate with high-energy radiation.

The heat for curing can be produced, for example, by passing an electrical current through the windings; it is

also possible to use an oven or an infrared (IR) or a near infrared radiation (NIR) source. The heating temperature (object temperature) may be in the range of 80 to 180°C. Typical curing times are, for example, 1 minute to 180 minutes, in case of NIR radiation the curing time may be shorter, for example, below 1 minute. The composition according to this invention can also be cured at temperatures below 80°C, for example at ambient temperatures, under the use of additives such as aromatic amines or salts of cobalt, copper, cerium or vanadium.

The coating according to this invention can also be cured by the application of high-energy radiation, e.g. ultraviolet (UV) light or electron beam. For UV curing, adequate initiators can be used, for examples, photoinitiators that absorb in a wavelength range of 190 to 450 nm.

Also the combination of photoinitiators with thermally labile initiators is possible, e.g. for a combination of heat curing and UV curing.

The high-energy radiation may be used for the acceleration of the curing process, but also for the through-curing of the applied composition, depending on the impregnation layer thickness. UV- and electron beam radiation can also be used to cure only the surface of the impregnation composition of the invention applied on the substrate, in order to reduce emission of volatile monomers of the composition in a thermal curing step afterwards.

The compositions according to this invention can be used in several fields of applications. They are especially useful for fixing of wound items, for example, coiled substrates, especially of coiled wires like magnet wires in electrical devices like rotors, stators or transformers, or of coiled metal foils in the electrical sector, or coiled substrates on the basis of glass fibers, plastic fibers or plastic foils, and may also be used for the impregnation of fabrics.

The invention will be described with reference to the following examples:

## Examples

### Example 1

### Composition of Prior Art a)

Composition of prior art a) is the commercial DuPont impregnating resin Voltatex® 4012, which is a resin based on an unsaturated polyester different from the polyester according to this invention, dissolved in styrene (viscosity at 25°C: 240mPas).

### Example 2

### Composition of Prior Art b)

Composition of prior art b) is the commercial DuPont impregnating resin Voltatex® 4302, which is a resin based on an unsaturated polyester different from the polyester according to this invention, dissolved in the acrylate of the reaction product of a polyaddition of ethylene oxide with trimethylol propane (viscosity at 25°C 7300mPas).

### Examples 3

### Composition according to the Invention

Component (A) is an unsaturated polyester based on 57 parts by weight of maleic anhydride, 28 parts by weight of tetrahydrophthalic anhydride, 14 parts by weight of trimethylol propane, 32 parts by weight of neopentyl glycol and 11 parts by weight of ethanolamine, which is further reacted with 13 parts by weight of a methacrylic acid derivative. Component (A) has the following properties: acid value 17mgKOH/g, double bond equivalent weight 210g/mol.
55 parts by weight of component (A) are heated to 100°C and dissolved in a mixture of 20 parts by weight of the acrylate of the reaction product of a polyaddition of ethylene oxide with trimethylol propane (component (B)) and 13 parts by weight of vinyl toluene (component (C)). After cooling to <40°C, 1.4 parts by weight of a C-C radical initiator (benzpinakol ether, component (D)) are added and mixed well (viscosity at 25°C: 3500mPas).

## Tests

### Curing loss

5g of the liquid impregnation material as described in examples 1-3 are poured into an aluminium dish (50mm diameter, 12mm height). The impregnation material is heated in a convection oven at 130°C for 3 hours. After curing, the loss of mass by evaporation during the thermal cure is measured (Curing loss). This value is determined as follows:

Curing loss = 1 - (net sample weight before cure / net sample weight after cure)

This procedure was carried out with 10 samples for each impregnation material, and the averages were determined.

Example 1 (prior art a)): Curing loss = 11.9 wt.-%

Example 2 (prior art b)): Curing loss = 1.0 wt.-%

Example 3 (acc. to invention): Curing loss = 2.0 wt.-%

**Bending force**

The bending forces of the impregnation materials were measured according to IEC61033. The results are shown in Table 1.

Table 1:

| material | bending force at 25°C | bending force at 130°C | bending force at 155°C | bending force at 180°C |
|---|---|---|---|---|
| Example 1 (prior art a)) | 222 N | 138 N | 94 N | 63 N |
| Example 2 (prior art b)) | 135 N | 34 N | 29 N | 28 N |
| Example 3 (invention) | 451 N | 286 N | 251 N | 105 N |

As the data show, the impregnation material according to this invention exhibits extraordinary mechanical properties especially at elevated temperatures while delivering low emissions upon curing and maintaining good impregnation properties due to medium viscosities.

## Claims

**1.** A composition for fixing wound items comprising

A) 5 to 90 wt% of at least one α, β -unsaturated polyester resin based on at least one unsaturated mono-, di- or tricarboxylic acids and/or mono-, di- or tricarboxylic acid group containing molecules, at least one polyol, at least one acrylic or methacrylic group containing component, wherein the α, β - unsaturated polyester resin comprises at least one α, β -unsaturated polyester imide resin,
B) 2 to 80 wt% of at least one monomeric and/or oligomeric ethylenically unsaturated component having a vapour pressure in a range of 0 to 100 Pa (0 to 1 mbar) at 20°C, preferred 0 to 50 Pa (0 to 0.5 mbar) at 20°C,
C) 0.1 to 40 wt% of at least one monomeric and/or oligomeric unsaturated component different from B) having a vapour pressure in a range of 0 to 1000 Pa (0 to 10 mbar) at 20°C, preferred 0 to 500 Pa (0 to 5 mbar) at 20°C,
D) 0 to 15 wt% of at least one customary additive, and
E) 0 to 30 wt% of at least one monomer and/or polymer containing epoxy or glycidyl ether or ester moieties,

the wt% being based on the total weight of the composition.

**2.** The composition of claim 1 comprising 10 to 75 wt% of component A).

**3.** The composition of claims 1 and 2 comprising 4 to 65 wt% of component B).

**4.** The composition of claims 1 to 3 comprising 1 to 40 wt% of component C).

**5.** The composition of claims 1 to 4 wherein the α, β -unsaturated polyester resin of A) has a hydroxyl value of 0 to 80 mg KOH/g, an acid value of 0 to 50 mg KOH/g and a urethane group concentration of 0 to 0.1 mol per 100g resin A).

**6.** The composition of claims 1 to 5 wherein the α, β -unsaturated polyester resin of A) has a number average molecular mass (Mn) in a range of 500 to 5000 g/mol.

**7.** The composition of claims 1 to 6 wherein the α, β -unsaturated polyester resin of A) is obtained by reaction of

(a) at least one α, β - ethylenically unsaturated dicarboxylic acid, its anhydride and/or an ester of the α, β - ethylenically unsaturated dicarboxylic acid, and
(b) at least one alcohol having one or more, preferably 2, 3 or 4, hydroxyl functionalities per molecule, and,
(c) at least one imide group containing substance with the formula

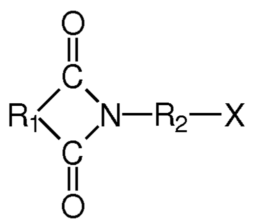

(Formula 1)

or

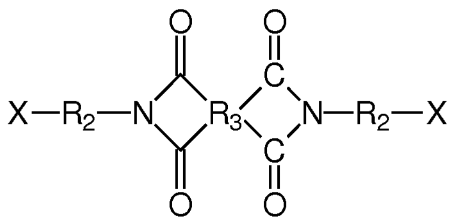

(Formula 2)

or

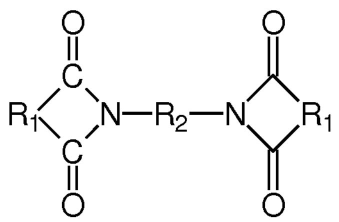

(Formula 3)

in which

$R_1$ is an aliphatic, cycloaliphatic or aromatic moiety in which the carbonyl groups in $R_1$ are in a 1,2-position and that contains at least one further reactive carboxyl or hydroxyl group or a C=C double bond or combinations thereof,
$R_2$ is an aliphatic, aromatic or cycloaliphatic moiety with 2 to 20 carbon atoms that may also contain oxygen or nitrogen atoms,
$R_3$ is an aliphatic, cycloaliphatic or aromatic moiety in which at least 2 of 4 carbonyl groups in $R_3$ are in a 1,2-position, and
X is a hydroxyl or carboxy functionality, and

(d) at least one component which is chemically bound into the resin and which contains at least one (meth)acrylic double bond, and
(e) possibly one or more mono, di- or tricarboxylic acids which are different from (a), and

(f) possibly one or more polyether polyols, polyolefinic polyols or polymeric polyols which are different from b), and
(g) possibly one or more polyisocyanates.

**8.** The composition of claim 7 wherein the α, β -unsaturated polyester resin of A) is obtained by reaction of components (a) to (g) in a ratio that 100g of component A) contain 0.05 to 0.50 mol of polymerizable, α, β - ethylenically unsaturated groups from component (a).

**9.** The composition of claims 1 to 8 whereby component (C) is a monomeric unsaturated component different from B) having a vapour pressure in a range of 0 to 1000 Pa (0 to 10 mbar) at 20°C.

**10.** A wound item fixed with the composition as defined in claims 1 to 9.

**Patentansprüche**

**1.** Zusammensetzung zur Fixierung gewickelter Elemente, umfassend

A) 5 bis 90 Gew.-% von mindestens einem α, β-ungesättigten Polyesterharz auf Basis mindestens einer ungesättigten Mono-, Di- oder Tricarbonsäure und/ oder Mono-, Di- oder Tricarbonsäuregruppen enthaltenden Molekülen, mindestens eines Polyols, mindestens einem eine Acryl- oder Methacrylgruppe enthaltenden Bestandteil, wobei das α, β-ungesättigte Polyesterharz mindestens ein α, β - ungesättigtes Polyesterimidharz umfasst,
B) 2 bis 80 Gew.-% von mindestens einem monomeren und/oder oligomeren ethylenisch ungesättigten Bestandteil mit einem Dampfdruck in einem Bereich von 0 bis 100 Pa (0 bis 1 mbar) bei 20 °C, bevorzugt 0 bis 50 Pa (0 bis 0,5 mbar) bei 20 °C,
C) 0,1 bis 40 Gew.-% von mindestens einem monomeren und/oder oligomeren ungesättigten Bestandteil, der sich von B) unterscheidet, mit einem Dampfdruck in einem Bereich von 0 bis 1000 Pa (0 bis 10 mbar) bei 20 °C, bevorzugt 0 bis 500 Pa (0 bis 5 mbar) bei 20 °C,
D) 0 bis 15 Gew.-% von mindestens einem üblichen Zusatzstoff, und
E) 0 bis 30 Gew.-% von mindestens einem Monomer und/oder Polymer, das Epoxy- oder Glycidylether- oder esterreste enthält,

wobei das Gew.-% auf dem Gesamtgewicht der Zusammensetzung basiert.

**2.** Zusammensetzung nach Anspruch 1, umfassend 10 bis 75 Gew.-% des Bestandteils A).

**3.** Zusammensetzung nach den Ansprüchen 1 und 2, umfassend 4 bis 65 Gew.-% des Bestandteils B).

**4.** Zusammensetzung nach den Ansprüchen 1 bis 3, umfassend 1 bis 40 Gew.-% des Bestandteils C).

**5.** Zusammensetzung nach den Ansprüchen 1 bis 4, wobei das α, β-ungesättigte Polyesterharz von A) eine Hydroxylzahl von 0 bis 80 mg KOH/g, eine Säurezahl von 0 bis 50 mg KOH/g und eine Urethangruppenkonzentration von 0 bis 0,1 Mol pro 100 g Harz A) aufweist.

**6.** Zusammensetzung nach einem der Ansprüche 1 bis 5, wobei das α, β-ungesättigte Polyesterharz von A) eine zahlenmittlere Molekülmasse (Mn) in einem Bereich von 500 bis 5.000 g/mol aufweist.

**7.** Zusammensetzung nach den Ansprüchen 1 bis 6, wobei das α, β-ungesättigte Polyesterharz von A) erhalten wird durch Umsetzung von

(a) mindestens einer α, β-ethylenisch ungesättigten Dicarbonsäure, deren Anhydrid und/oder einem Ester der α, β-ethylenisch ungesättigten Dicarbonsäure, und
(b) mindestens einem Alkohol mit einer oder mehreren, vorzugsweise 2, 3 oder 4, Hydroxylfunktionalitäten pro Molekül, und,
(c) mindestens einer eine Imidgruppe enthaltenden Substanz mit der Formel

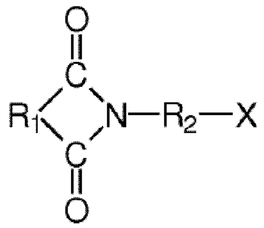

(Formel 1)

oder

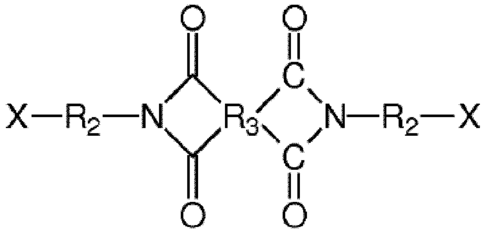

(Formel 2)

oder

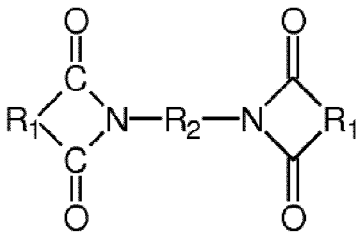

(Formel 3)

in denen

> $R_1$ eine aliphatische, cycloaliphatische oder aromatische Einheit ist, in der die Carbonylgruppen in $R_1$ in einer 1,2-Stellung stehen und die mindestens eine weitere reaktive Carboxyl- oder Hydroxylgruppe oder eine C=C-Doppelbindung oder Kombinationen davon enthält,
> $R_2$ eine aliphatische, aromatische oder cycloaliphatische Einheit mit 2 bis 20 Kohlenstoffatomen ist, die ebenfalls Sauerstoff- oder Stickstoffatome enthalten kann,
> $R_3$ eine aliphatische, cycloaliphatische oder aromatische Einheit ist, in der sich mindestens 2 von 4 Carbonylgruppen in $R_3$ in einer 1,2-Stellung befinden, und
> X eine Hydroxyl- oder Carboxyfunktionalität ist, und

(d) mindestens einem Bestandteil, der chemisch in das Harz gebunden ist und mindestens eine (Meth)acryl-Doppelbindung enthält, und
(e) gegebenenfalls einer oder mehrerer Mono-, Di- oder Tricarbonsäuren, die sich von (a) unterscheiden, und
(f) gegebenenfalls einem oder mehreren Polyetherpolyolen, polyolefinischen Polyolen oder polymeren Polyolen, die sich von b) unterscheiden, und
(g) gegebenenfalls einem oder mehreren Polyisocyanaten.

**8.** Zusammensetzung nach Anspruch 7, wobei das $\alpha,\beta$-ungesättigte Polyesterharz von A) durch Umsetzung der Bestandteile (a) bis (g) in einem Verhältnis erhalten wird, in dem 100 g des Bestandteils A) 0,05 bis 0,50 mol polymerisierbare, $\alpha,\beta$-ethylenisch ungesättigte Gruppen aus Bestandteil (a) enthalten.

**9.** Zusammensetzung nach den Ansprüchen 1 bis 8, wobei der Bestandteil (C) ein monomerer ungesättigter Bestandteil ist, der sich von B) unterscheidet, mit einem Dampfdruck in einem Bereich von 0 bis 1.000 Pa (0 bis 10 mbar) bei 20 °C.

**10.** Gewickeltes Element, fixiert mit der Zusammensetzung wie in den Ansprüchen 1 bis 9 definiert.

## Revendications

**1.** Composition de fixation d'articles pour plaie comprenant

A) de 5 à 90 % en poids d'au moins une résine de polyester α,β-insaturée basée sur au moins un parmi des acides mono-, di- ou tricarboxyliques insaturés et/ou des molécules contenant un groupe acide mono-, di- ou tricarboxylique, au moins un polyol, au moins un composant contenant un groupe acrylique ou méthacrylique, la résine de polyester α,β-insaturée comprenant au moins une résine d'imide de polyester α,β-insaturée,
B) de 2 à 80 % en poids d'au moins un composant monomère et/ou oligomère à insaturation éthylénique ayant une pression de vapeur comprise dans la plage allant de 0 à 100 Pa (0 à 1 mbar) à 20 °C, de préférence de 0 à 50 Pa (0 à 0,5 mbar) à 20 °C,
C) de 0,1 à 40 % en poids d'au moins un composant monomère et/ou oligomère insaturé différent de B) ayant une pression de vapeur comprise dans la plage allant de 0 à 1000 Pa (0 à 10 mbar) à 20 °C, de préférence de 0 à 500 Pa (0 à 5 mbar) à 20 °C,
D) de 0 à 15 % en poids d'au moins un additif habituel, et
E) de 0 à 30 % en poids d'au moins un monomère et/ou polymère contenant des fragments époxy ou éthers glycidyliques ou esters,

le % en poids étant basé sur le poids total de la composition.

**2.** Composition selon la revendication 1, comprenant de 10 à 75 % en poids de composant A).

**3.** Composition selon les revendications 1 et 2 comprenant de 4 à 65 % en poids de composant B).

**4.** Composition selon les revendications 1 à 3, comprenant de 1 à 40 % en poids de composant C).

**5.** Composition selon les revendications 1 à 4, dans laquelle la résine de polyester α,β-insaturée de A) a un indice d'hydroxyle de 0 à 80 mg de KOH/g, un indice d'acide de 0 à 50 mg de KOH/g et une concentration en groupe uréthane de 0 à 0,1 mol pour 100 g de résine A).

**6.** Composition selon les revendications 1 à 5, dans laquelle la résine de polyester α,β-insaturée de A) a une masse moléculaire moyenne en nombre (Mn) comprise dans la plage allant de 500 à 5000 g/mol.

**7.** Composition selon les revendications 1 à 6, dans laquelle la résine de polyester α,β-insaturée de A) est obtenue en faisant réagir

(a) au moins un acide dicarboxylique à insaturation α,β-éthylénique, son anhydride et/ou un ester de l'acide dicarboxylique à insaturation α,β-éthylénique, et
(b) au moins un alcool ayant une ou plusieurs, de préférence 2, 3 ou 4, fonctionnalités hydroxyle par molécule, et
(c) au moins une substance contenant un groupe imide répondant à la formule

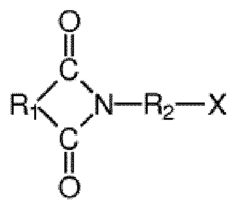

(Formule 1)

ou

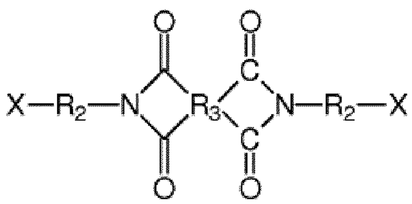

(Formule 2)

ou

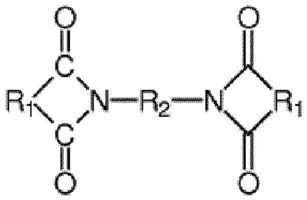

(Formule 3)

dans lesquelles

$R_1$ est un fragment aliphatique, cycloaliphatique ou aromatique dans lequel les groupes carbonyle dans $R_1$ sont en positions 1,2 et qui contient au moins un autre groupe carboxyle ou hydroxyle réactif ou une double liaison C=C ou des combinaisons de ceux-ci,
$R_2$ est un fragment aliphatique, cycloaliphatique ou aromatique ayant de 2 à 20 atomes de carbone qui peut également contenir des atomes d'oxygène ou d'azote,
$R_3$ est un fragment aliphatique, cycloaliphatique ou aromatique dans lequel au moins 2 à 4 groupes carbonyle dans $R_3$ sont en positions 1,2, et
X est une fonctionnalité hydroxyle ou carboxyle, et

(d) au moins un composant qui est chimiquement lié dans la résine et qui contient au moins une double liaison (méth)acrylique, et
(e) éventuellement un ou plusieurs acides mono-, di- ou tricarboxyliques qui sont différents de (a), et
(f) éventuellement un ou plusieurs polyols de polyéther, polyols polyoléfiniques ou polyols polymères qui sont différents de b), et
(g) éventuellement un ou plusieurs polyisocyanates.

**8.** Composition selon la revendication 7, dans laquelle la résine de polyester $\alpha,\beta$-insaturée de A) est obtenue en faisant réagir les composants (a) à (g) selon un rapport où 100 g de composant A) contiennent de 0,05 à 0,50 mol de groupes à insaturation $\alpha,\beta$-éthylénique polymérisables du composant (a).

**9.** Composition selon les revendications 1 à 8, dans laquelle le composant (C) est un composant insaturé monomère différent de B) ayant une pression de vapeur comprise dans la plage allant de 0 à 1000 Pa (0 à 10 mbar) à 20 °C.

**10.** Article pour plaie fixé avec la composition telle que définie selon les revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 3107450 A
- EP 101585 A
- EP 871677 A
- EP 963413 A
- EP 968501 A
- US 3485733 A1
- DE 2040094 A
- DE 2719903 A
- DE 3247058 A
- EP 0255802 A